# FASCICULE DE BREVET EUROPEEN

(11) **EP 2 674 649 B1**
(45) Date de publication et mention de la délivrance du brevet: **13.01.2016**
(21) Numéro de dépôt: 13171519.5
(22) Date de dépôt: 11.06.2013
(51) Int. Cl.: F16K 11/07, F16K 27/04

(54) **Dispositifs de distribution pneumatique et leurs réglages**
Vorrichtungen zur pneumatischen Verteilung, und deren Einstellung
Pneumatic delivery devices and adjustments thereof

(30) Priorité: 11.06.2012 FR 1255422
(43) Date de publication de la demande: 18.12.2013
(73) Titulaire: Asco Joucomatic SA, 92500 Rueil Malmaison (FR)
(72) Inventeur: Solet, Daniel, 28170 SAINT SAUVEUR MARVILLE (FR); Schmidt, Michel, 28170 SAINT MAIXME HAUTERIVE (FR)
(74) Mandataire: Nony

(56) Documents cités:
- CH-A- 393 015
- DE-A1- 4 224 180
- FR-A1- 2 474 633
- GB-A- 1 021 500
- GB-A- 1 224 241

## Description

La puissance de l'air comprimé destinée aux vérins et moteurs doit être contrôlée. Le distributeur situé entre la source d'énergie pneumatique et l'actionneur remplit cette fonction. Ce pré actionneur est associé à un vérin et sa taille et son type sont fonctions de ce vérin.

Dans les distributeurs à tiroirs, plusieurs technologies de construction peuvent être employées.

Une première solution est donnée dans GB 1021500 et US 3303855 qui décrivent la construction et le fonctionnement d'un distributeur avec joints élastomères statiques sur le corps de distribution. Les différentes formes de joints concourantes à l'étanchéité dynamique avec le tiroir obturateur mobile sont déclinées dans différents brevets tels que DE 19603719, GB 2309753, US 5711535, DE 102005019698 et EP 1284379.

En alternative US 5609343 décrit la construction et le fonctionnement d'un distributeur avec joints élastomères solidaires du tiroir mobile de distribution. Les différentes formes de joints concourantes à l'étanchéité dynamiques étant déclinées dans les brevets EP 0866252 et EP 0916879.

Enfin US 6164323 décrit la construction et le fonctionnement d'un système de distribution dont l'étanchéité dynamique est obtenue sans l'aide de joint élastomère, simplement par ajustement précis entre le tiroir et la chemise, dite étanchéité métal-métal.

Ces trois solutions sont très spécifiques et il n'est actuellement pas possible de changer de solution pour une autre.

Les solutions utilisant des joints permettent une bonne étanchéité au détriment de la durée de vie tandis que les solutions sans joint élastomère, dites métal-métal augmentent la durée de vie du distributeur mais génèrent un débit de fuite.

L'invention a pour but, surtout, de proposer une solution au problème ci-dessus mentionné.

La demande DE 42 24 180 A1 divulgue un agencement de distributeur dans lequel un empilement de joints est disposé dans un logement du corps du distributeur.

Ces joints sont traversés par le tiroir, axialement mobile dans le corps du distributeur.

Cette demande est silencieuse sur la manière dont le corps est fermé à ses extremités.

En particulier, DE 42 24 180 ne divulgue pas de moyen de verrouillage permettant un réglage d'une contrainte exercée suivant l'axe longitudinal sur les joints, qui permettrait par exemple de compenser des tolérance de fabrication lors de la mise en place de ce moyen de verrouillage.

FR 2 474 633 décrit des joints disposés à distance les uns des autres dans la direction longitudinale, étant maintenus par des bagues d'appui, reliées entre elles pour former un élément monobloc. Les bagues d'appui ne permettent pas d'exercer une contrainte longitudinale plus ou moins grande sur les joints, contrainte qui pourrait être utile pour compenser des tolérances de fabrication, par exemple.

GB 1 224 241 concerne un distributeur à clapets.

CH 393 015 décrit un distributeur dont le corps est fermé à une extrémité par un bouchon fileté et dont le tiroir porte des joints annulaires.

Selon l'invention, un dispositif de distribution pneumatique comprenant un corps de distribution et un tiroir obturateur mobile guidé en translation suivant un axe longitudinal dans le corps de distribution, est **caractérisé en ce que** au moins un élément intermédiaire est interposé radialement entre le corps de distribution et le tiroir obturateur mobile, un moyen de verrouillage fermant un orifice prévu dans le corps de distribution permettant l'introduction dans le corps de distribution de l'élément intermédiaire suivant l'axe longitudinal.

Le dispositif peut être construit suivant deux architectures différentes. Le dispositif peut comprendre un corps commun de distribution associé avec un alignement de joints toriques multifonctionnels intercalés d'entretoises (demi-bagues) autorisant un débit optimum et d'un tiroir mobile.

En variante le dispositif peut comprendre un corps commun de distribution associé à une chemise et un tiroir mobile, ces deux dernières parties assurant une étanchéité glissante « métal-métal ».

Ces deux dispositions ne sont pas limitatives par rapport à l'application d'un dispositif de distribution avec joints élastomères solidaires du tiroir mobile qui n'est pas décrite ici.

Le moyen de verrouillage peut exercer une contrainte sur l'élément intermédiaire suivant l'axe longitudinal. Le moyen de verrouillage peut être réalisé en une seule pièce dite baïonnette.

Avantageusement, de par l'utilisation du moyen d'assemblage par baïonnette, un ou plusieurs, il est permis que le corps de distribution et les boitiers de commande soient communs aux deux technologies de construction et adaptés soit à la commande monostable ou bistable de vérins simple ou double effets.

Un alignement de joints et d'entretoises, formant l'élément intermédiaire, est interposé radialement entre le corps de distribution et le tiroir obturateur mobile, ledit alignement étant pré-chargé suivant l'axe longitudinal de manière à permettre l'ajustement de la pression de contact de l'étanchéité dynamique glissante entre les joints et le tiroir.

Les joints peuvent être aptes à assurer l'étanchéité statique entre le corps et les entretoises en coopérant avec des formes particulières prévues dans les entretoises.

La forme particulière peut être apte à assurer une équipartition de la pré-charge sur les joints.

Cette pré-charge a pour intérêt de comprimer axialement et uniformément chaque joint de la ligne de distribution. Il en résulte alors une déformation radiale, uniformément répartie autour du diamètre interne de chaque joint, dont l'effet est de venir comprimer l'ensemble des joints sur le tiroir. Cette pré-charge est calculée de façon à assurer l'étanchéité dynamique avec le tiroir, tout en limitant leur compression pour optimiser la durée de vie du produit. De par la forme du joint multifonctionnel et de la contre forme des entretoises la pré-charge participe aussi à l'étanchéité statique entre chaque joint et le corps de distribution.

Le dispositif selon l'invention utilise des joints de la famille de ceux décrits dans la publication conjointe du LRCCP et de la société ASCO JOUCOMATIC S.A France de P.ROUMAGNAC, D. HUBERT, « Simulations et essais sur un joint de distributeur d'automatisme pneumatique. Journée technique LRCCP au CEAT Toulouse, 13 septembre 2000 ».

L'une des difficultés de ce type de réglage, appliqué aux distributeurs pneumatiques, est de verrouiller et de maintenir dans le temps la valeur de pré-charge ainsi appliquée sur les joints, tout en limitant le nombre de pièces nécessaires lors de son montage et de sa mise en fonction par conséquent de réduire le coût global de cette fonction, tout en améliorant le ratio encombrement / débit d'air.

L'utilisation d'une baïonnette selon l'invention, pièce unique, simple et peu onéreuse, est une solution à ce problème. Le réglage de la ligne de distribution est réalisé par l'insertion de cette baïonnette dans le corps du distributeur et l'appui sur la ligne de distribution, une deuxième baïonnette pouvant être placée de la même façon, à l'autre extrémité de la ligne de distribution. Le maintien en position de la baïonnette dans le corps est réalisé en une seule opération, par rotation angulaire de cette baïonnette. Lors de cette rotation angulaire, des profils triangulaires présents dans le corps viennent s'insérer dans les profils conjugués des parties saillantes de la baïonnette permettant d'assurer un verrouillage en position.

D'autre part, l'invention décrit l'utilisation d'entretoises et de joints multi-fonctionnels dont les formes sont optimisées pour permettre la répartition homogène de la pré-charge entre joints, qui offre un avantage certain par rapport à la publication scientifique du LRCCP de septembre 2000.

L'élément intermédiaire peut également être réalisé sous la forme d'un manchon métallique dans le cas d'une solution dite métal-métal.

Dans ce cas des chocs peuvent intervenir et endommager les éléments du dispositif. Il est possible de mettre en place un amortisseur logé et centré dans une cavité du corps de distribution.

D'autres caractéristiques et avantages de l'invention apparaîtront dans la description qui suit d'un mode de réalisation d'alimentation d'un vérin double effet avec distributeur bistable avec référence aux dessins annexés mais qui n'a aucun caractère limitatif. Sur ces dessins :

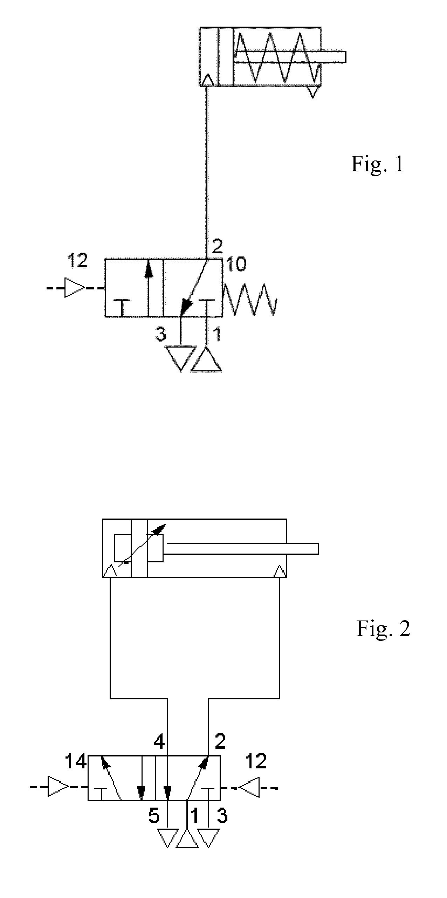

La figure 1 est un schéma illustrant l'alimentation d'un vérin simple effet, avec distributeur monostable.
La figure 2 est un schéma illustrant l'alimentation d'un vérin double effet avec distributeur bistable.
La figure 3 illustre une ligne de distribution d'un distributeur pneumatique selon l'invention, des joints élastomères étant prévus sur le corps.
Les figures 4, 5, 6, 7, 8 illustrent la progressivité du serrage des joints sur le corps permettant l'équipartition de la pré-charge.
La figure 9 illustre la cavité profilée dans le corps du distributeur pneumatique afin de recevoir la baïonnette.
La figure 10 illustre une baïonnette.
Les figures 11 illustrent une baïonnette logée dans le corps du distributeur.
Les figures 12 illustrent une baïonnette insérée et verrouillée dans le corps du distributeur.
La figure 13 illustre une ligne de distribution d'un distributeur pneumatique à tiroir de technologie dite métal-métal qui ne fait pas partie de l'invention.

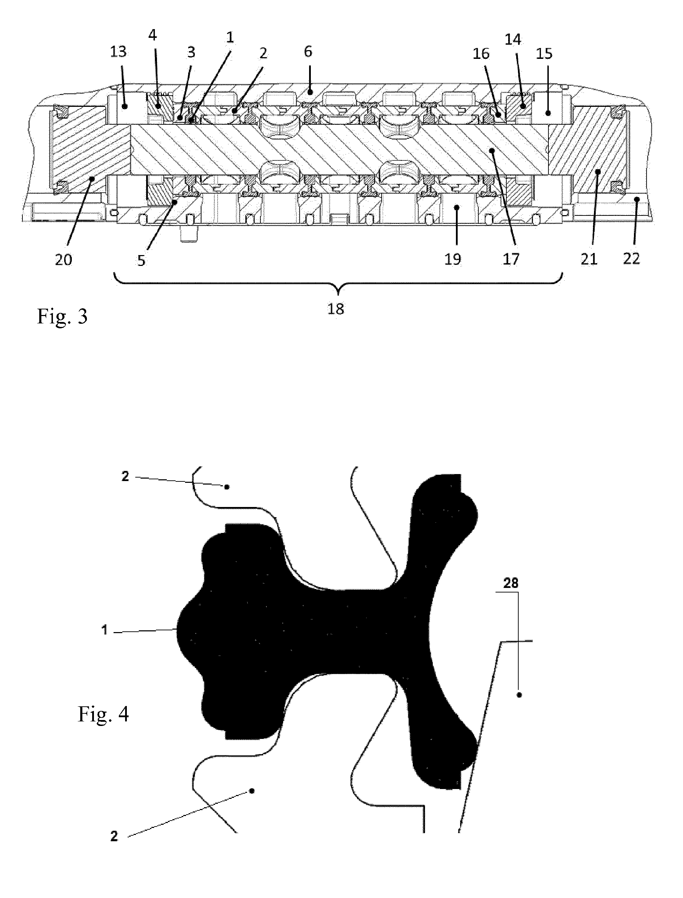

On peut voir figure 3 un dispositif de distribution pneumatique à joints élastomères statiques sur le corps. Le dispositif comprend une ligne de distribution 18 équipée de joints de révolution 1 assurant une étanchéité entre les canaux d'entrée et de sortie 19 du distributeur pneumatique et par rapport à l'extérieur.

Des entretoises 2 sont placées entre les joints 1 de façon à les positionner et les maintenir en position. Une baïonnette 4 est positionnée dans un alésage 13 du corps 6. La baïonnette 4 peut être positionnée librement ou en butée contre l'épaulement 5 du corps 6 puis verrouillée par rotation angulaire. On introduit alors un empilage de joints et d'entretoises préassemblés au travers d'une manchette et permettant l'équi-répartition de l'effort de pré-charge axiale.

Le principe d'équipartition de cette pré-charge axiale repose non seulement sur la forme des joints 1 et de la contre forme donnée par les entretoises 2, mais aussi des coefficients de frottement entre le corps de distribution 6 d'une part, les entretoises 2 d'autre part, les pieds des joints 1. La figure 4 montre la première phase de l'assemblage des entretoises 2 avec les joints 1 et le début de la mise en place dans la manchette 28.

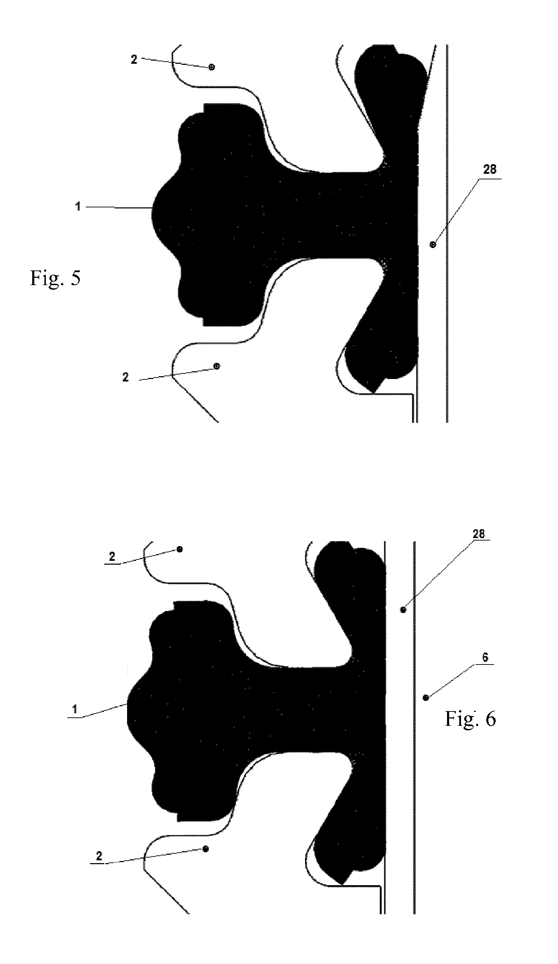

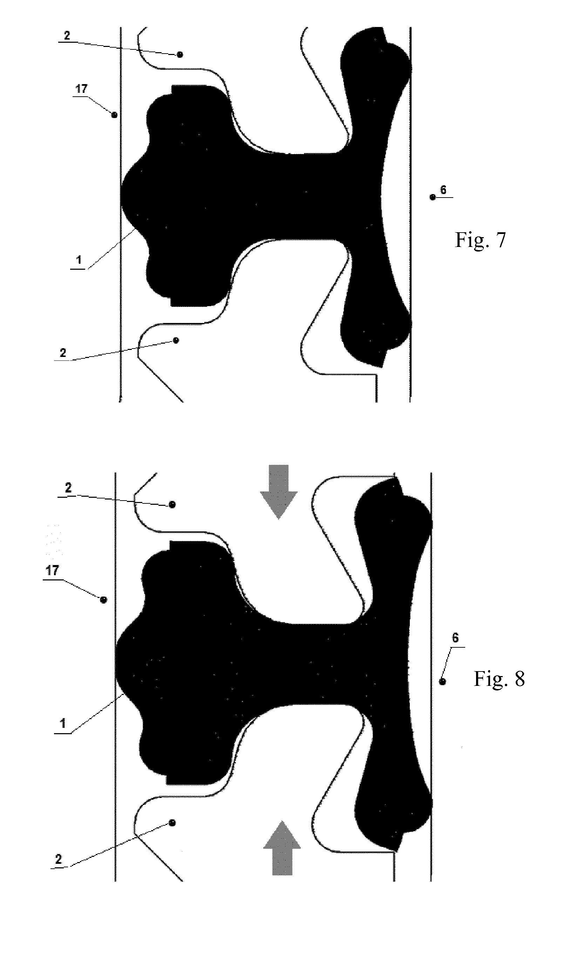

La figure 5 montre la fin de la mise en place de la manchette. La figure 6 donne l'allure de l'assemblage joint entretoise dans la manchette d'assemblage et introduction dans le corps de distribution. La manchette est alors extraite et une pige calibrée de même diamètre que le tiroir est alors introduite comme illustré figure 7.

Les forces normales de contact entre les pieds des joints et le corps de distribution sont telles qu'elles permettent le glissement des joints lors de la mise en pré-charge axiale (figure 8) et d'équi-répartir cet effort sur l'ensemble de l'empilement. La pige calibrée est alors ôtée, une deuxième baïonnette 14 est alors verrouillée en position par rotation angulaire. Un tiroir 17 est alors inséré au centre de la ligne de distribution 18.

Des entretoises d'extrémités 3 et 16 permettent de dissocier les joints d'extrémité des baïonnettes respectives 4 et 14.

Les pistons 20, 21, logés dans les boîtiers de commande 22, peuvent être mis en contact avec le tiroir 17. Le mode de réalisation qui a été décrit est du type distributeur bistable et utilise deux pistons. Dans le cas d'un mode de réalisation d'un distributeur de type monostable, le distributeur n'utilise qu'un piston logé dans le boitier de commande et le rappel en position à manque d'air utilise un ressort logé entre le tiroir et l'autre boitier de commande.

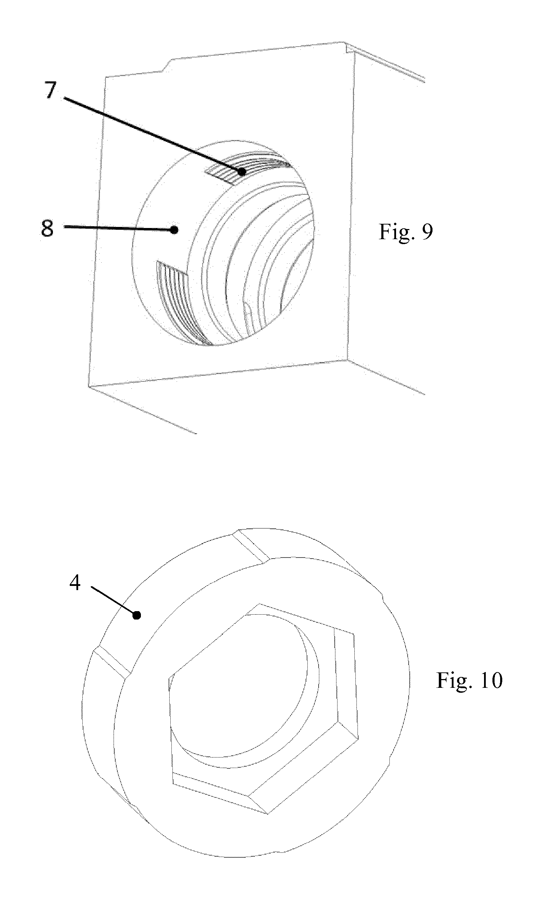

Le principe de verrouillage par baïonnette(s) est plus particulièrement illustré figure 10. Dans le corps 6, des secteurs angulaires 7 ont été pourvus d'une ou plusieurs griffes 12 comme illustré figure 9. Entre ces secteurs, des évidements 8 permettent l'insertion des parties complémentaires 9 de la baïonnette 4. En regard des secteurs angulaires 7 du corps 8 pourvus de griffes 12, des évidements 10 sont prévus sur la baïonnette 4.

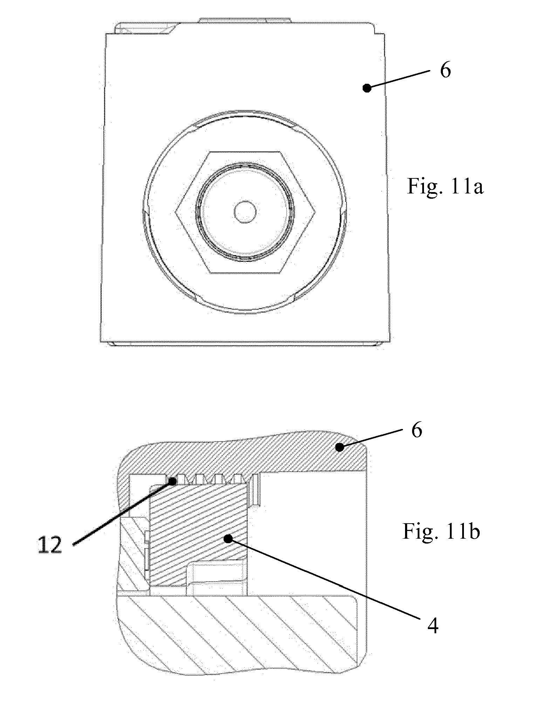

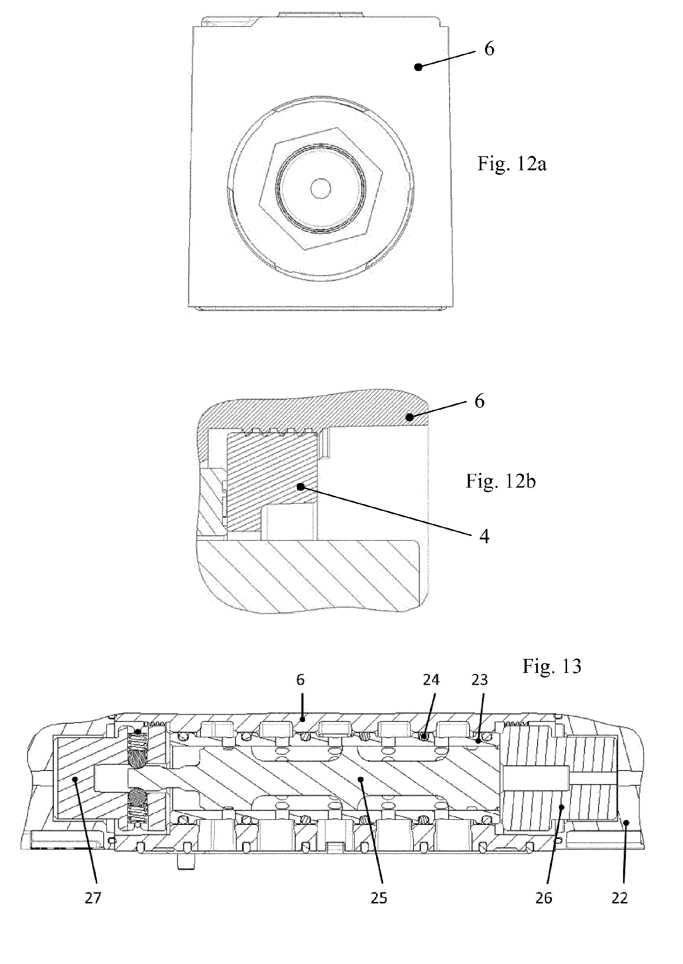

La rotation de la baïonnette 4 est réalisée par l'insertion d'un outil adapté dans l'empreinte 11 de la baïonnette 4. Lors de cette rotation, les profils 12 des secteurs angulaires 7 du corps 8 viennent en interférences avec les parties saillantes 9 de la baïonnette 4 assurant ainsi le verrouillage par déformation plastique de la baïonnette 4 (figures 11, 12) et le maintien en compression des joints 1 dans la ligne de distribution 18.

Un dispositif de distribution pneumatique dit métal-métal est illustré dans la figure 13 et comprend une chemise métallique 23 insérée dans le corps 6, l'étanchéité entre le corps 6 et la chemise métallique 23 étant assurée par les joints statiques 24.

Les deux positions du tiroir mobile 25 assurent alternativement la commande du vérin. Un amortisseur 26 est centré et logé dans la cavité profilée 8 du corps 6, et un amortisseur verrouilleur 27 à l'autre extrémité du dispositif de distribution est centré et logé de façon identique au précédent. Ces deux amortisseurs sont réalisés dans un matériau élastique et plastique (polymère thermoplastique, type polyacétale).

Il est important de noter que les amortisseurs 26 et 27 remplacent les baïonnettes 4 dans les logements prévus dans le corps 6 pour les baïonnettes 4. De cette façon aucune modification du corps 6 n'est nécessaire pour passer d'une utilisation avec joints à une utilisation métal-métal.

Les amortisseurs 26 et 27 sont plus massifs que les baïonnettes 4 et exploitent au maximum l'espace disponible de manière à optimiser leur capacité à amortir les chocs.

Il est possible d'utiliser les mêmes boitiers de commande 22 de la technologie de construction avec joints élastomères. Le corps 6 et les boitiers de commande 22 peuvent de ce fait être totalement interchangeables entre les deux technologies.

## Revendications

1. Dispositif de distribution pneumatique comprenant un corps (6) de distribution et un tiroir obturateur mobile (17) guidé en translation suivant un axe longitudinal dans le corps de distribution (6), au moins un élément intermédiaire (2) étant interposé radialement entre le corps de distribution (6) et le tiroir obturateur mobile (17), un moyen de verrouillage (4) fermant un orifice prévu dans le corps de distribution (6) permettant l'introduction dans le corps de distribution (6) de l'élément intermédiaire (2) suivant l'axe longitudinal, **caractérisé par le fait que** le moyen de verrouillage (4) exerce une contrainte sur l'élément intermédiaire (2) suivant l'axe longitudinal, qu' un alignement de joints (1) et d'entretoises (2), formant l'élément intermédiaire, est interposé radialement entre le corps de distribution (6) et le tiroir obturateur mobile (17), ledit alignement étant pré-chargé suivant l'axe longitudinal de manière à permettre l'ajustement de la pression de contact de l'étanchéité dynamique glissante entre les joints (1) et le tiroir (17).

2. Dispositif de distribution pneumatique selon la revendication 1, **caractérisé en ce que** le moyen de verrouillage est réalisé en une seule pièce dite baïonnette (4).

3. Dispositif selon la revendication 2, le maintien de la baïonnette dans le corps étant réalisé en une seule opération, par rotation angulaire de la baïonnette, rotation durant laquelle des profils triangulaires présents dans le corps viennent s'insérer dans des profils conjugés des parties saillantes de la baïonnette, permettant d'assurer un verrouillage en position.

4. Dispositif selon l'une des revendications 2 et 3, le corps (6) comportant des secteurs angulaires (7) pourvus d'une ou plusieurs griffes (12), et entre ces secteurs, des évidements (8) permettant l'insertion de parties complémentaires de la baïonnette, des évidements (10) étant prévus sur la baïonnette en regard des secteurs angulaires du corps.

5. Dispositif de distribution pneumatique selon la revendication 1, **caractérisé en ce que** les joints (1) sont aptes à assurer l'étanchéité statique entre le corps (6) et les entretoises (2) en coopérant avec des formes particulières prévues dans les entretoises (2).

6. Dispositif de distribution pneumatique selon la revendication 5, **caractérisé en ce que** la forme particulière est apte à assurer une équipartition de la pré-charge sur les joints (1).

7. Dispositif de distribution pneumatique selon l'une quelconque des revendications précédentes, **caractérisé en ce que** le dispositif est adaptable à une commande monostable ou à une commande bistable de distribution d'air.

8. Ensemble comportant un premier dispositif tel que défini dans l'une quelconque des revendications 1 à 7, et un deuxième dispositif comportant un corps (6) de distribution identique, et un tiroir obturateur mobile (17) guidé en translation suivant un axe longitudinal dans le corps de distribution (6), au moins un élément intermédiaire (23) étant interposé radialement entre le corps de distribution (6) et le tiroir obturateur mobile (17), un moyen de verrouillage (4) fermant un orifice prévu dans le corps de distribution (6) permettant l'introduction dans le corps de distribution (6) de l'élément intermédiaire (23) suivant l'axe longitudinal, ce deuxième dispositif comportant une chemise associée au tiroir mobile, assurant une étanchéité glissante « métal-métal ».

9. Dispositif de distribution pneumatique selon la revendication 8, **caractérisé en ce qu'il** comporte au moins un amortisseur logé et centré dans une cavité du corps de distribution, cet amortisseur étant de préférence en un matériau et plastique, et venant de préférence en remplacement du moyen de verrouillage, notamment de la baïonnette, du premier dispositif.

## Patentansprüche

1. Pneumatische Verteilungsvorrichtung mit einem Verteilungskörper (6) und einem beweglichen Schiebeverschluss (17), der translatorisch entlang einer Längsachse in dem Verteilungskörper (6) geführt ist, wenigstens einem Zwischenelement (2), das radial zwischen dem Verteilungskörper (6) und dem beweglichen Schiebeverschluss (17) angeordnet ist, einem Verriegelungsmittel (4), das eine in dem Verteilungskörper (6) vorgesehene Öffnung verschließt, die das Einführen des Zwischenelements (2) entlang der Längsachse in den Verteilungskörper (6) erlaubt, **dadurch gekennzeichnet, dass** das Verriegelungsmittel (4) entlang der Längsachse eine Einengung auf das Zwischenelement (2) ausübt, und dass eine Anordnung von Gelenken (1) und Abstandshaltern (2), die das Zwischenelement bilden, radial zwischen dem Verteilungskörper (6) und dem beweglichen Schiebeverschluss (17) ist, wobei die Anordnung entlang der Längsachse derart vorgespannt ist, dass sie eine Anpassung des Druckkontakts der dynamischen Schiebedichtung zwischen den Gelenken (1) und dem Schieber (17) erlaubt.

2. Pneumatische Verteilungsvorrichtung nach Anspruch 1, **dadurch gekennzeichnet, dass** das Verriegelungsmittel durch einen einstückigen, sogenannten Bajonettverschluss (4) realisiert ist.

3. Vorrichtung nach Anspruch 2, wobei das Halten des Bajonettverschlusses in dem Körper in einer einzigen Operation realisiert ist, indem der Bajonettverschluss um einen Winkel gedreht wird, wobei während der Rotation in dem Körper vorhandene Dreieckprofile in ein entsprechendes Profil von Vorsprüngen des Bajonettverschlusses eingreifen und dadurch das Sicherstellen einer Positionsverriegelung zulassen.

4. Vorrichtung nach einem der Ansprüche 2 und 3, wobei der Körper (6) Winkelsektoren (7) mit einer oder mehreren Rillen (12) aufweist, sowie zwischen den Sektoren Vertiefungen (8), die das Einführen komplementärer Teile des Bajonettverschlusses ermöglichen, wobei Vertiefungen (10) auf dem Bajonettverschluss gegenüber den Winkelsektoren des Körpers vorgesehen sind.

5. Pneumatische Verteilungsvorrichtung nach Anspruch 1, **dadurch gekennzeichnet, dass** die Gelenke (1) dazu ausgelegt sind, die statische Dichtheit zwisehen den Körpern (6) und den Abstandshaltern (2) in Zusammenwirkung mit speziellen, in den Abstandshaltern (2) vorgesehenen Formen sicherzustellen.

6. Pneumatische Verteilungsvorrichtung nach Anspruch 5, **dadurch gekennzeichnet, dass** die spezielle Form dazu ausgelegt ist, eine Gleichverteilung der Vorspannung auf die Gelenke (1) sicherzustellen.

7. Pneumatische Verteilungsvorrichtung nach einem der vorstehenden Ansprüche, **dadurch gekennzeichnet, dass** die Vorrichtung für einen monostabilen Antrieb oder einen bistabilen Antrieb zur Luftverteilung einsetzbar ist.

8. Gesamtsystem mit einer ersten Vorrichtung gemäß einem der Ansprüche 1 bis 7 und einer zweiten Vorrichtung mit einem identischen Verteilungskörper (6) und einem beweglichen Schiebeverschluss (17), der translatorisch entlang einer Längsachse in dem Verteilungskörper (6) geführt ist, wenigstens einem Zwischenelement (23), das radial zwischen dem Verteilungskörper (6) und dem beweglichen Schiebeverschluss (17) angeordnet ist, einem Verriegelungsmittel (4), das eine in dem Verteilungskörper (6) vorgesehene Öffnung verschließt, die das Einführen des Zwischenelements (23) entlang der Längsachse in den Verteilungskörper (6) erlaubt, wobei die zweite Vorrichtung eine dem beweglichen Schieber zugeordnete Hülse aufweist, die eine Gleitdichtheit "Metall-Metall" sicherstellt.

9. Pneumatische Verteilungsvorrichtung nach Anspruch 8, **dadurch gekennzeichnet, dass** sie wenigstens einen Dämpfer aufweist, der innerhalb eines Hohlraums des Verteilungskörpers angeordnet und darin zentriert ist, wobei der Dämpfer vorzugsweise aus einem Kunststoffmaterial ist, und vorzugsweise als Ersatz für das Verriegelungsmittel, insbesondere den Bajonettverschluss, der ersten Vorrichtung zum Einsatz kommt.

## Claims

1. Pneumatic distribution device comprising a distribution body (6) and a mobile valve spool (17) guided in translation along a longitudinal axis in the distribution body (6), at least one intermediate element (2) being disposed radially between the distribution body (6) and the mobile valve spool (17), locking means (4) closing an orifice in the distribution body (6) for introducing the intermediate element (2) into the distribution body (6) along the longitudinal axis, **characterized in that** the locking means (4) exert a force on the intermediate element (2) along the longitudinal axis, a row of seals (1) and spacers (2) forming the intermediate element is disposed radially between the distribution body (6) and the mobile valve spool (17), said row being preloaded along the longitudinal axis to allow adjustment of the contact pressure of the dynamic sliding seal between the the seals (1) and the spool (17).

2. Pneumatic distribution device according to claim 1, **characterized in that** the locking means take the form of a one-piece so-called bayonet coupling (4).

3. Device according to claim 2, the bayonet coupling being retained in the body by a single operation of angular rotation of the bayonet coupling, during which rotation triangular profiles in the body are inserted in conjugate profiles of the projecting portions of the bayonet coupling making it possible to ensure locking in position.

4. Device according to either one of Claims 2 and 3, the body (6) including angular sectors (7) with one or more claws (12) and between these sectors recesses (8) for inserting complementary parts of the bayonet coupling, recesses (10) on the bayonet coupling facing the angular sectors of the body.

5. Pneumatic distribution device according to claim 1, **characterized in that** the seals (1) are adapted to ensure a static seal between the body (6) and the spacers (2) by cooperating with particular shapes in the spacers (2).

6. Pneumatic distribution device according to claim 5, **characterized in that** the particular shape is adapted to produce an even distribution of the preloading of the seals (1).

7. Pneumatic distribution device according to any one of the preceding claims, **characterized in that** the device is adaptable for monostable or bistable control of distribution of air.

8. Assembly comprising a first device as defined in any one of claims 1 to 7 and a second device including an identical distribution body (6) and a mobile valve spool (17) guided in translation along a longitudinal axis in the distribution body (6), at least one intermediate element (23) being radially disposed between the distribution body (6) and the mobile valve spool (17), locking means (4) closing an orifice in the distribution body (6) allowing introduction of the intermediate element (23) into the distribution body (6) along the longitudinal axis, this second device including a piston liner associated with the mobile spool providing a sliding "metal-to-metal" seal.

9. Pneumatic distribution device according to claim 8, **characterized in that** it includes at least one damper housed and centered in a cavity of the distribution body, this damper preferably being made of a plastics material and preferably replacing the locking means, in particular the bayonet coupling, of the first device.
